# EUROPEAN PATENT APPLICATION

(11) **EP 3 714 976 A1**
(43) Date of publication of application: **30.09.2020**
(21) Application number: 20162423.6
(22) Date of filing: 11.03.2020
(51) Int. Cl.: B01J 41/20, B01J 41/05, B01J 41/13, B01D 15/36

(54) **HYDROPHILIC ANION EXCHANGE CHROMATOGRAPHY MEDIA**

(30) Priority: 29.03.2019 US 201916370314
(71) Applicant: Dionex Corporation, Sunnyvale, CA 94085 (US)
(72) Inventor: POHL, Christopher A, Sunnyvale, CA California 94085 (US); JAYARAMAN, Manikandan, Sunnyvale, CA California 94085 (US)
(74) Representative: Boult Wade Tennant LLP

(57) **Abstract**

An anion exchange stationary phase comprises substrate particles, a based condensation polymer layer attached to the substrate particles, one or more alkylamine condensation polymer layers covalently attached to base condensation polymer layer, and a terminating condensation layer covalently attached to the alkylamine condensation polymer layer. They layers are formed from amines and polyethylene oxide where the hydroxyl groups are spaced from the amines by two carbon atoms.

## Description

### BACKGROUND

Chromatography is a widely used analytical technique for the chemical analysis and separation of molecules. Chromatography involves the separation of one or more analyte species from other matrix components present in a sample. A stationary phase of a chromatography column is typically selected so that there is an interaction with the analyte. Such interactions can be ionic, hydrophilic, hydrophobic, or a combination thereof. For example, the stationary phase can be derivatized with ionic moieties that ideally will bind to ionic analytes and matrix components with varying levels of affinity. A mobile phase is percolated through the stationary phase and competes with the analyte and matrix components for binding to the ionic moieties. The mobile phase or eluent are terms used to describe a liquid solvent or buffer solution that is pumped through a chromatography column. During this competition, the analyte and matrix components will elute off of the stationary phase as a function of time and then be subsequently detected at a detector. Examples of some typical detectors are a conductivity detector, a UV-VIS spectrophotometer, and a mass spectrometer. Over the years, chromatography has developed into a powerful analytical tool that is useful for creating a healthier, cleaner, and safer environment where complex sample mixtures can be separated and analyzed for various industries such as water quality, environmental monitoring, food analysis, pharmaceutical, and biotechnology.

### BRIEF SUMMARY

An anion exchange stationary phase comprises negatively charged substrate particles, a base condensation polymer layer attached to the negatively charged substrate particles, one or more alkylamine condensation polymer layers covalently attached to base condensation polymer layer at the quaternary amine of that layer, and an optional terminating condensation layer covalently attached to the alkylamine condensation polymer layer. The base condensation polymer layer comprises quaternary amines, polyethylene oxides, and hydroxy groups; wherein at least a portion of the hydroxy groups are spaced from the quaternary amines by two carbons. The alkylamine condensation polymer layers comprise polyethylene oxides, hydroxy groups; wherein at least a portion of the hydroxy groups are spaced from the quaternary amines by two carbons, and quaternary amines. The terminating condensation layer comprises polyethylene oxides, hydroxy groups; wherein at least a portion of the hydroxy groups are spaced from the quaternary amines by two carbons, and quaternary amines, wherein the quaternary amine comprises two alkyl alcohols, wherein the alcohols are spaced from the quaternary amines by two carbons.

An anion exchange stationary phase is formed by forming a base condensation layer by reacting polyethylene glycol diglycidyl ether with a primary amine on negatively charged substrate particles. Then forming one or more alkylamine polymer condensation layers on the base condensation layer by conducting one or more reaction cycles. The reaction cycle comprises treating with polyethylene glycol diglycidyl ether followed by treating with alkylamine.

An anion exchange stationary phase is formed by forming a base condensation layer by reacting polyethylene glycol diglycidyl ether with a primary amine on negatively charged substrate particles. Then forming one or more alkylamine polymer condensation layers on the base condensation layer by conducting one or more reaction cycles. The reaction cycle comprises treating with polyethylene glycol diglycidyl ether followed by treating with alkylamine. A terminating condensation layer is on the alkylamine polymer condensation layers by treating with polyethylene glycol diglycidyl ether followed by treating with tertiary amine comprising two alkyl alcohols and an alkyl group.

An anion exchange stationary phase is formed by forming a base condensation layer by reacting polyethylene glycol diglycidyl ether with a primary amine on negatively charged substrate particles. Then forming one or more alkylamine polymer condensation layers on the base condensation layer by conducting one or more reaction cycles. The reaction cycle comprises treating with polyethylene glycol diglycidyl ether followed by treating with alkylamine. A terminating condensation layer is formed on the alkylamine polymer condensation layers by treating with polyethylene glycol diglycidyl ether followed by treating with a primary or secondary amine, followed by treating with an epoxide.

These and other objects and advantages shall be made apparent from the accompanying drawings and the description thereof.

### BRIEF DESCRIPTION OF THE FIGURES

The accompanying drawings, which are incorporated in and constitute a part of this specification, illustrate embodiments, and together with the general description given above, and the detailed description of the embodiments given below, serve to explain the principles of the present disclosure.
FIGURE 1 shows various chemical structures of reagents that can be used in forming condensation polymers and condensation reaction products for anion exchange resins.
FIGURE 2 shows a schematic representation of a base condensation polymer layer attached to a negatively charged substrate particle.
FIGURE 3 shows a schematic of a first polyethylene diepoxide covalently attached to the base condensation polymer and forming a pendant epoxide group to form a first polyethylene oxide diepoxide condensation reaction product.
FIGURE 4 shows a schematic of an amine group covalently attached to the pendant epoxide groups of the first polyethylene oxide diepoxide condensation reaction product to form a first amine condensation reaction product.
FIGURE 5 shows a schematic of a second polyethylene diepoxide covalently attached to the amine group of the first amine condensation reaction product to form a second polyethylene oxide diepoxide condensation reaction product.
FIGURE 6 shows a schematic of a methyl diethanolamine (MDEA) covalently attached to the pendant epoxide groups of the second polyethylene oxide diepoxide condensation reaction product to form a MDEA condensation reaction product.
FIGURE 7 shows a schematic of an amine group covalently attached to the pendant epoxide groups of the second polyethylene oxide diepoxide condensation reaction product to form a second amine condensation reaction product.
FIGURE 8 shows a schematic of a third polyethylene diepoxide covalently attached to the amine group of the second amine condensation reaction product to form a third polyethylene oxide diepoxide condensation reaction product.
FIGURE 9 shows a schematic of an amine group covalently attached to the pendant epoxide groups of the third polyethylene oxide diepoxide condensation reaction product to form a third amine condensation reaction product.
FIGURE 10 shows chromatography of a standard solution of anions performed on Examples A, B, and C.
FIGURE 11 shows chromatography of a standard solution of polythionates performed on Example A.
FIGURE 12 shows chromatography of a standard solution of polythionates performed on Example B.
FIGURE 13 shows chromatography of a standard solution of polythionates performed on Example C.
FIGURE 14 shows chromatography of a standard solution of polarizable anions performed on Example A.
FIGURE 15 shows chromatography of a standard solution of polarizable anions performed on Example B.

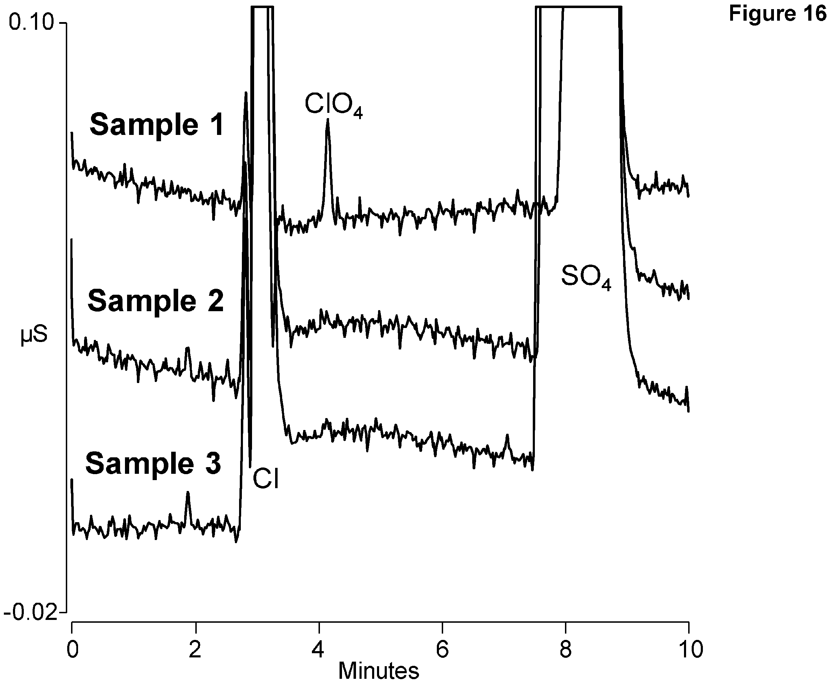

FIGURE 16 shows chromatography of soil samples containing chlorine and sulfate performed on Example B.

### DETAILED DESCRIPTION

An anion exchange stationary phase comprising a negatively charged substrate particles, a base condensation polymer layer attached to the negatively charged substrate particles, one or more alkylamine condensation polymer layers, and a terminating condensation layer.

The anion exchange stationary phase may be used in chromatography to separate polarizable, hydrophobic anions and polythionates. Examples of polarizable, hydrophobic anions are p-toluenesulfonic acid, 2-naphthalenesulfonic acid, 1-naphthol-4-sulfonic acid, naphthalene-trisulfonic acid, FDC Yellow #5, FDC Yellow #6, and FDC Red #40. In addition, chromatography of samples containing perchlorate and sulfate elute perchlorate before the sulfate, permitting them to be detected before the detector is saturated by the sulfate. Most commercially available anion exchange phases are not able to separate samples containing perchlorate and sulfate because perchlorate elutes on a tail portion of a sulfate peak making analysis difficult, especially when high concentrations of sulfate are present in the sample.

Polarizable hydrophobic analyte anions that have a negatively charged component and a hydrophobic component can be difficult to separate on anion exchange chromatography columns. Such analytes tend to stick to anion exchange chromatography columns and not elute off of the column making ion exchange chromatographic analysis difficult and sometimes impossible. Moreover, polarizable hydrophobic analytes that have polyanionic charge such as polythionates can be even more difficult to elute off of an anion exchange chromatography column. The anion exchange stationary phases described herein makes separation of these polarizable hydrophobic analytes possible.

The negatively charged substrate particles can be any inert polymeric substrate particle that is chemically stable under the intended conditions of use (e.g., pH 0 to 14). The polymeric particle may be based on a divinylbenzene (DVB) crosslinking monomer and a support resin monomer where the support resin monomer may be an ethylvinylbenzene (EVB) monomer, a styrene monomer, and a combination thereof. The mole percent of DVB can be 55% and EVB can be 45%. The support resin particles may have a diameter ranging from about 1 micron to about 20 microns, such as from about 2 microns to about 10 microns, and from about 3 microns to about 7 microns. The support resin particles may have a surface area ranging from about 20 m²/g to about 800 m²/g, such as from about 20 m²/g to about 500 m²/g, from about 20 m²/g to about 100 m²/g, and from about 20 m²/g to about 30 m²/g. The support resin particles may have a pore size ranging from about 100 angstroms to about 5000 angstroms, such as about 500 angstroms to about 5000 angstroms, about 500 angstroms to about 4000 angstroms, about 500 angstroms to about 3000 angstroms, about 500 angstroms to about 2000 angstroms, about 1000 angstroms to about 4000 angstroms, about 1000 angstroms to about 3000 angstroms, and about 1000 angstroms to about 2000 angstroms.

In some embodiments, the negatively charged substrate particles may include one or more super macroporous particles (SMP). SMP can be obtained from commercial sources, including Agilent PLRP-s1000A and Waters Styragel HR4-HR6. The super macroporous particles can have a diameter of 4-6 µm, a surface area of 20-30 m²/g, pore sizes of 1000Å -2000Å, and a crosslinking mole percent of 55% of the divinylbenzene and a mole percent of 45% of the ethylvinylbenzene.

In some embodiments, the polymeric substrate particles may be based on other vinylaromatic monomers such as alpha-methylstyrene, chlorostyrene, chloromethylstyrene, vinyltoluene, vinylnaphthalene, and combinations thereof. The polymeric substrate particles may also be based on unsaturated monomers, and copolymers of the above vinylaromatic monomers and unsaturated monomers. In some embodiments, such monomers are copolymerized with a vinylaromatic crosslinking monomer such as divinylbenzene but other vinylaromatic crosslinking monomers such as trivinylbenzene, divinylnaphthalene, and combinations thereof may also be used.

The polymeric substrate particles can be sulfonated to create a negative charge at least on the surface of the particle. For example, particles made with 45% DVB and 55% EVB can be sulfonated by treating the particles with glacial acetic acid and concentrated sulfuric acid. In some embodiments, the polymeric substrate is grafted with acrylic acid and a water soluble free radical initiator to introduce negatively charge carboxylate groups as described in U.S. Patent No. 9,132,364, that process is incorporated by reference.

A base condensation polymer layer is attached to the negatively charged substrate particles by reacting polyethylene glycol diglycidyl ether with a primary amine in the presences of the negatively charged substrate particles. The base condensation polymer is attached to the negatively charged substrate particles by electrostatic interaction. The negatively charged substrate particle can be contained as a packed bed in a reaction column. A solution of the polyethylene glycol diglycidyl ether and the primary amine can be flowed through the reaction column to form the base condensation polymer layer on the negatively charged substrate particle. In some embodiments, the base condensation layer is formed in a reaction slurry, where the polyethylene glycol diglycidyl ether is reacted with a primary amine in the presences of the negatively charged substrate particles. The solid substrate particles may be washed and then used in the subsequent steps.

Examples of the alkylamine in the base condensation polymer layer include, but are not limited to methyl, ethyl, propyl, butyl, pentyl, and hexyl. In some embodiments the alkylamine in the base condensation polymer layer is methyl amine. In some embodiments the alkylamine in the base condensation polymer layer is ethyl amine.

The polyethylene glycol diglycidyl ether reacts with the amine to form polyethylene oxide. The molecular weight of the polyethylene oxide moiety is from about 150 to about 1000, such as about 150 to about 800, about 150 to about 600, about 150 to about 500, about 200 to about 800, about 200 to about 600, about 300 to about 800, about 300 to about 600, and about 400 to about 600. The molecular weight of this polymer moiety is the number average molecular weight in units of grams per mole. In some embodiments, the molecular weight of the polyethylene oxide moiety is about the same as that of the polyethylene glycol diglycidyl ether used to form it.

In some embodiments, the mole ratio of polyethylene glycol diglycidyl ether to the primary amine is about 1:1. In some embodiments, the ratio of polyethylene glycol diglycidyl ether to the primary amine is greater or less to make the base condensation polymer layer more or less crosslinked.

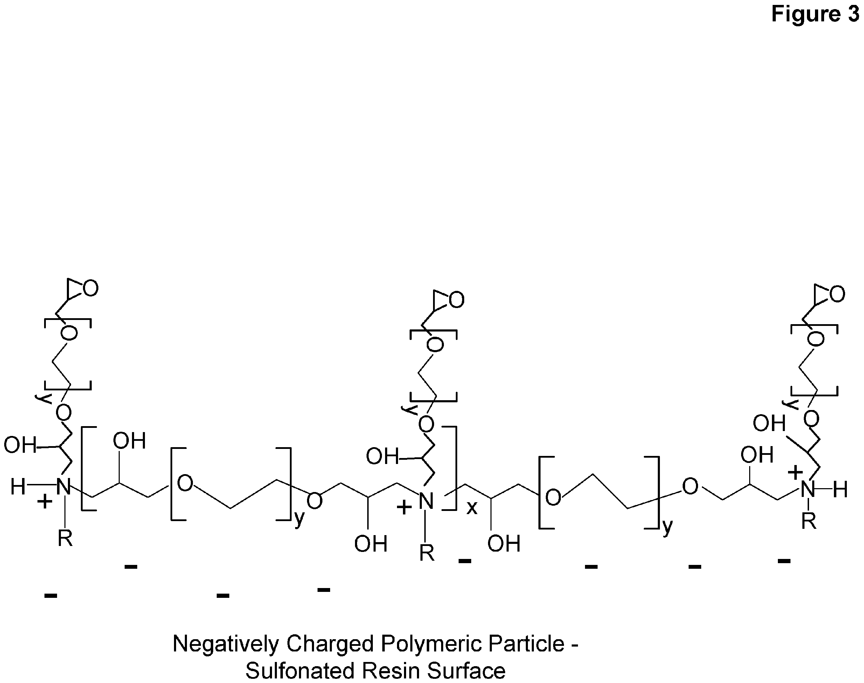

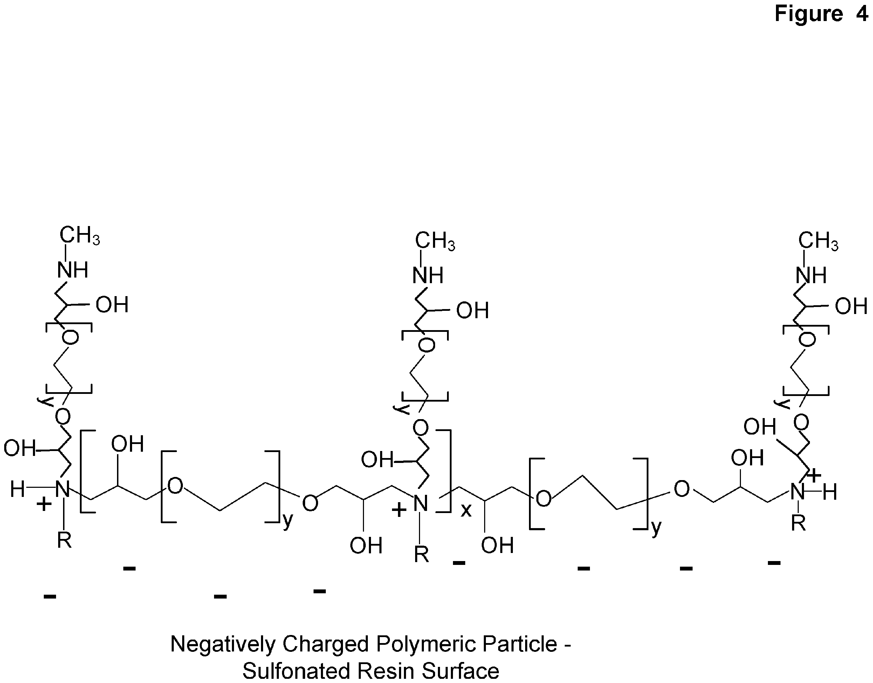

One or more alkylamine polymer condensation layers are attached to the base condensation polymer layer. A first alkylamine polymer condensation layer is formed by conducting a reaction cycle of reacting the base condensation polymer layer with polyethylene glycol diglycidyl ether followed by treating with alkylamine. A second alkylamine polymer condensation layer may be formed on the first alkylamine polymer condensation layer by a second reaction cycle. Additional layers may be formed by conducting additional reaction cycles. An illustration of the first reaction cycle is shown in FIGURES 3 and 4, where FIGURE 3 shows the product after treatment with polyethylene glycol diglycidyl ether and FIGURE 4 shows the product after treatment with alkylamine. In some embodiments, the alkylamine polymer condensation layers are formed by passing a solution of the polyethylene glycol diglycidyl ether and the primary amine a reaction column containing the base condensation polymer layer. In some embodiments, the alkylamine polymer condensation layers are formed in a slurry with the base condensation polymer layer.

In some embodiments, there is only one alkylamine polymer condensation layer. In some embodiments, there are two alkylamine polymer condensation layers. In some embodiments, there are one to five alkylamine polymer condensation layers. Each layer is formed by conducting a reaction cycle.

In some embodiments the alkylamine in the alkylamine polymer condensation layer is selected from methyl amine, ethyl amine, ammonia, ethanol amine, 1-amino-2,3-propanediol, and glucamine. In some embodiments the alkylamine in the alkylamine polymer condensation layer is methyl amine. In some embodiments the alkylamine in the alkylamine polymer condensation layer is ethyl amine. In some embodiments, the alkylamine is not required to be the same in each alkylamine polymer condensation layer. In some embodiments, the alkylamine is a mixture of alkylamines.

The polyethylene glycol diglycidyl ether reacts with the amine to form polyethylene oxide. The molecular weight of the polyethylene oxide moiety is from about 150 to about 1000, such as about 150 to about 800, about 150 to about 600, about 150 to about 500, about 200 to about 800, about 200 to about 600, about 300 to about 800, about 300 to about 600, and about 400 to about 600. The molecular weight of this polymer moiety is the number average molecular weight. In some embodiments, the molecular weight of the polyethylene oxide moiety is about the same as that of the polyethylene glycol diglycidyl ether used to form it.

In some embodiments, the mole ratio of polyethylene glycol diglycidyl ether to the primary amine is about 1:1. In some embodiments, the ratio of polyethylene glycol diglycidyl ether to the primary amine is greater or less to make the base condensation polymer layer more or less crosslinked.

The terminating condensation layer is similar to the alkylamine polymer condensation layer except it is the outer layer. It is formed by reacting the alkylamine polymer condensation layer with polyethylene glycol diglycidyl ether followed by treating with alkylamine. The alkylamine does not need to be the same alkylamine used in the forming of the alkylamine polymer condensation layers. In some embodiments, the terminating condensation layer is formed by passing a solution of the polyethylene glycol diglycidyl ether and the primary amine a reaction column containing the one or more alkylamine polymer condensation layers. In some embodiments, the terminating condensation layer is formed in a slurry with the one or more alkylamine polymer condensation layers.

In some embodiments, the alkylamine used in forming the terminating condensation layer is a tertiary amine. Examples of tertiary amines include but are not limited to methyl diethanolamine (MDEA), dimethylethanolamine, N,N'-dimethyl-1-amino-2,3-propanediol, and N,N'-dimethylglucamine. In some embodiments, the tertiary amine is MDEA. In some embodiments, the tertiary amine is formed by a reaction with a primary amine that is subsequently treated to form a tertiary amine, such as by ethylene oxide or glycidol. In some embodiments, the alkylamine comprises one or more hydroxyl groups that are separated from the amine by two carbons. In some embodiments, the alkylamine comprises two hydroxyl groups that are separated from the amine by two carbons.

The polyethylene glycol diglycidyl ether reacts with the amine to form polyethylene oxide. The molecular weight of the polyethylene oxide moiety is from about 150 to about 1000, such as about 150 to about 800, about 150 to about 600, about 150 to about 500, about 200 to about 800, about 200 to about 600, about 300 to about 800, about 300 to about 600, and about 400 to about 600. The molecular weight of this polymer moiety is the number average molecular weight. In some embodiments, the molecular weight of the polyethylene oxide moiety is about the same as that of the polyethylene glycol diglycidyl ether used to form it.

In some embodiments, the mole ratio of polyethylene glycol diglycidyl ether to the primary amine is about 1:1. In some embodiments, the ratio of polyethylene glycol diglycidyl ether to the primary amine is greater or less to make the base condensation polymer layer more or less crosslinked.

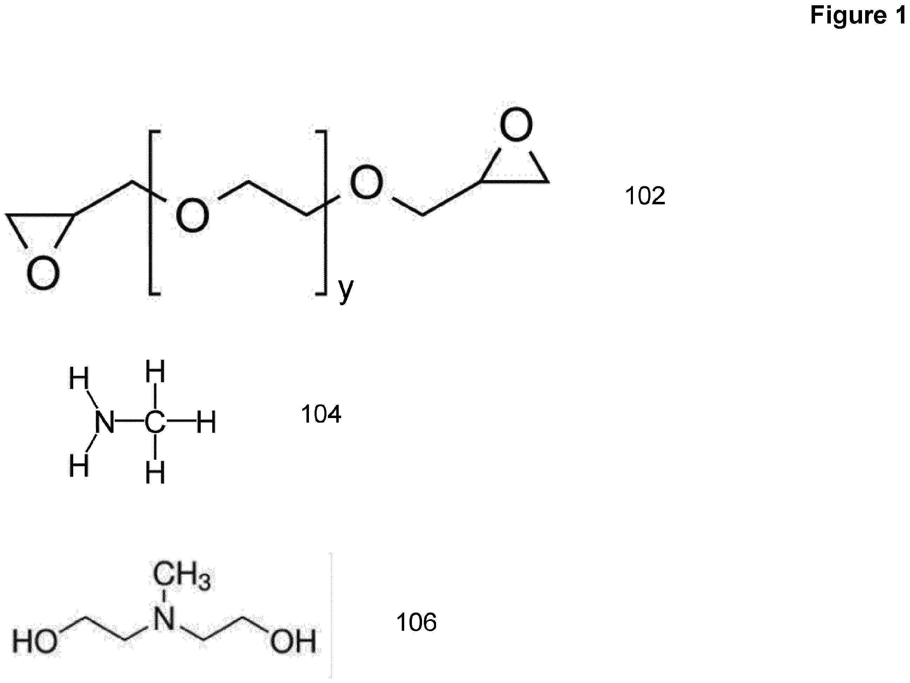

FIGURE 1 shows various chemical structures of reagents that can be used in forming condensation polymers and condensation reaction products for anion exchange resins. The reagents in FIGURE 1 are polyethylene glycol diglycidyl ether 102, methylamine 104, methyl diethanolamine (MDEA)106.

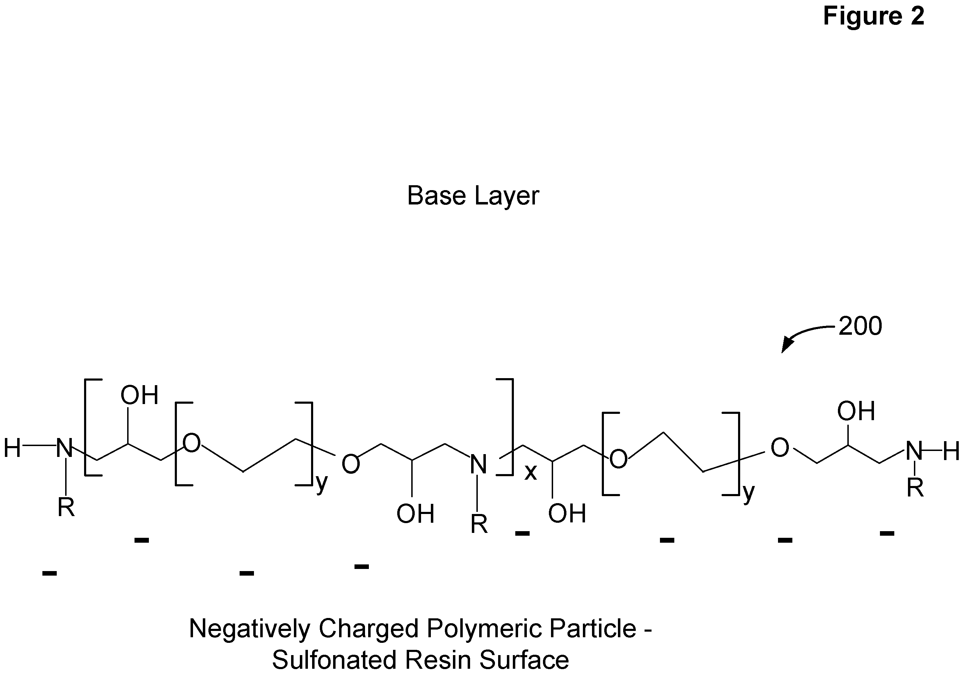

FIGURE 2 shows a schematic representation of a base condensation polymer layer 200 attached to a negatively charged substrate particle. The base condensation polymer includes quaternary amines, polyethylene oxides, and hydroxy groups. The base condensation polymer layer 200 may be formed from a primary amine and polyethylene glycol diglycidyl ether, such as methyl amine 104 and polyethylene glycol diglycidyl ether 102 (see Figure 1). Although the base polymer layer is depicted as linear, it is possible for some of the amine groups to be quaternized and form either branched or crosslinked portions. The base layer 200 can be formed in the presence of a negatively charged polymeric particle where the base layer associates and/or partially binds with the negatively charged polymeric particle, as illustrated in Figure 2. Referring to Figure 2-5, and 7, R may be an alkyl group such as, for example, methyl, ethyl, propyl, butyl, pentyl, and hexyl. The term y may be values ranging from about 2 to about 20, such as about 6 to about 12. The term x may values ranging from about 10 to about 100, such as about 20 to about 40.

FIGURE 3 shows a schematic of a first polyethylene diepoxide covalently attached to the base condensation polymer and forming a pendant epoxide group to form a first polyethylene oxide diepoxide condensation reaction product. This is the product formed from the first step of the reaction cycle to form the alkylamine polymer condensation layer.

FIGURE 4 shows a schematic of an amine group covalently attached to the pendant epoxide groups of the first polyethylene oxide diepoxide condensation reaction product to form a first amine condensation reaction product. This is the product formed from the second step of the reaction cycle to form the alkylamine polymer condensation layer.

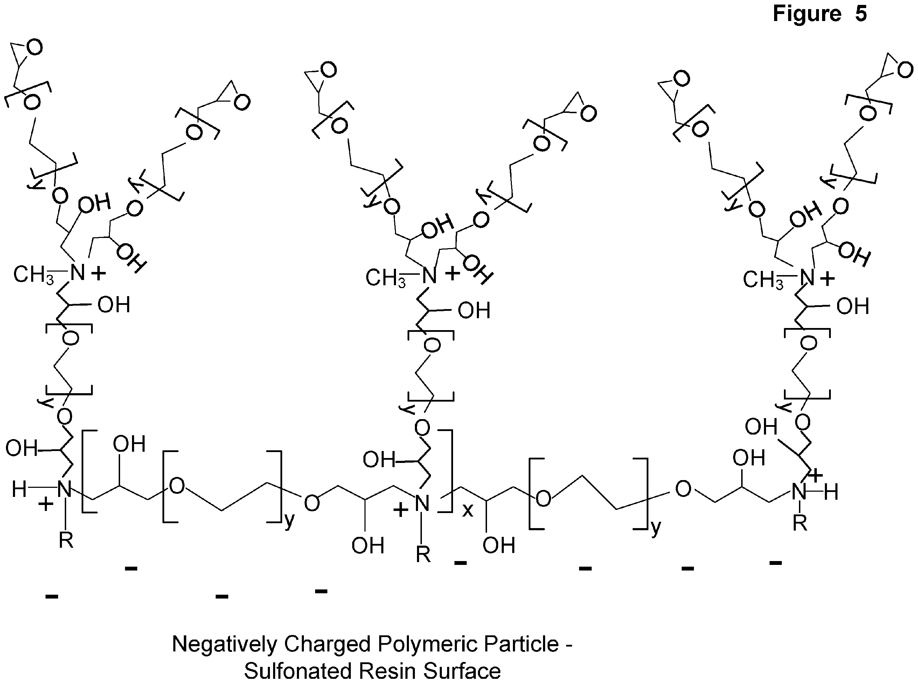

FIGURE 5 shows a schematic of a second polyethylene diepoxide covalently attached to the amine group of the first amine condensation reaction product to form a second polyethylene oxide diepoxide condensation reaction product. This is the product formed from the first step of a second reaction cycle to form the alkylamine polymer condensation layer, or it is the product formed from the first step in forming the terminating condensation layer.

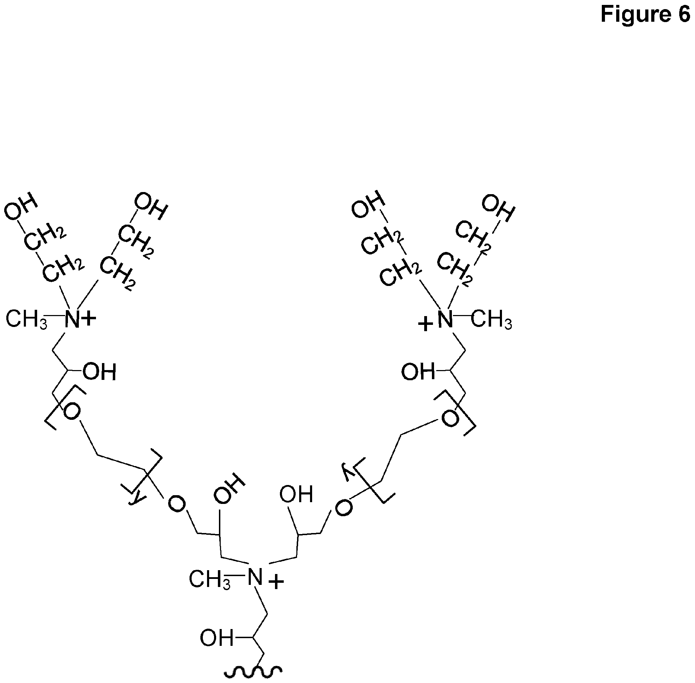

FIGURE 6 shows a schematic of a methyl diethanolamine (MDEA) covalently attached to the pendant epoxide groups of the second polyethylene oxide diepoxide condensation reaction product to form a MDEA condensation reaction product. This is the product formed from the second step in forming the terminating condensation layer. In this case the alkylamine used was MDEA. The squiggle can represent adjacent chemical moieties, such as, the base condensation polymer 200 and at least a portion of one or more alkylamine condensation polymer layers.

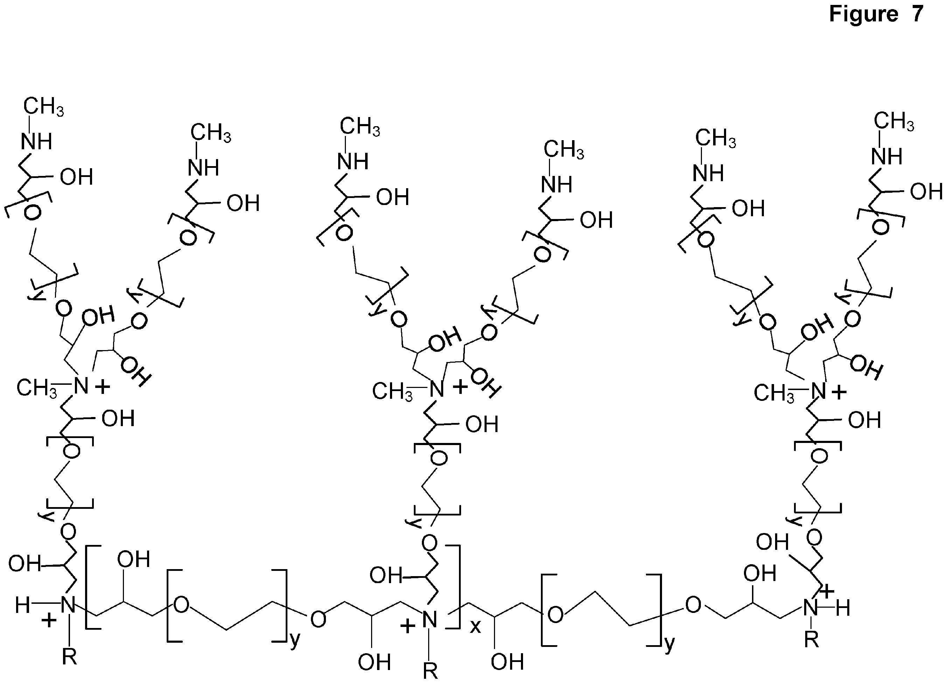

FIGURE 7 shows a schematic of an amine group covalently attached to the pendant epoxide groups of the second polyethylene oxide diepoxide condensation reaction product to form a second amine condensation reaction product. This is the product formed from the second step of a second reaction cycle to form a second alkylamine polymer condensation layer.

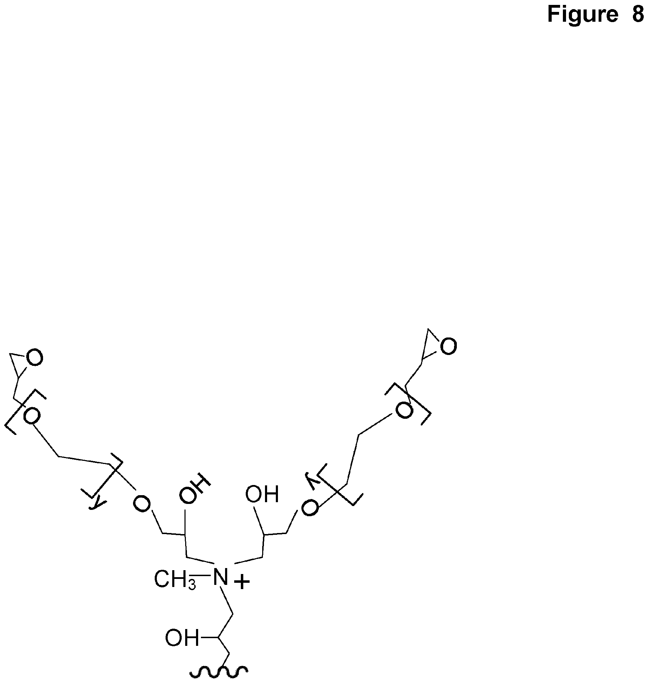

FIGURE 8 shows a schematic of a third polyethylene diepoxide covalently attached to the amine group of the second amine condensation reaction product to form a third polyethylene oxide diepoxide condensation reaction product. This is the product formed from the first step of a third reaction cycle to form a third alkylamine polymer condensation layer, or it is the product formed from the first step in forming the terminating condensation layer.

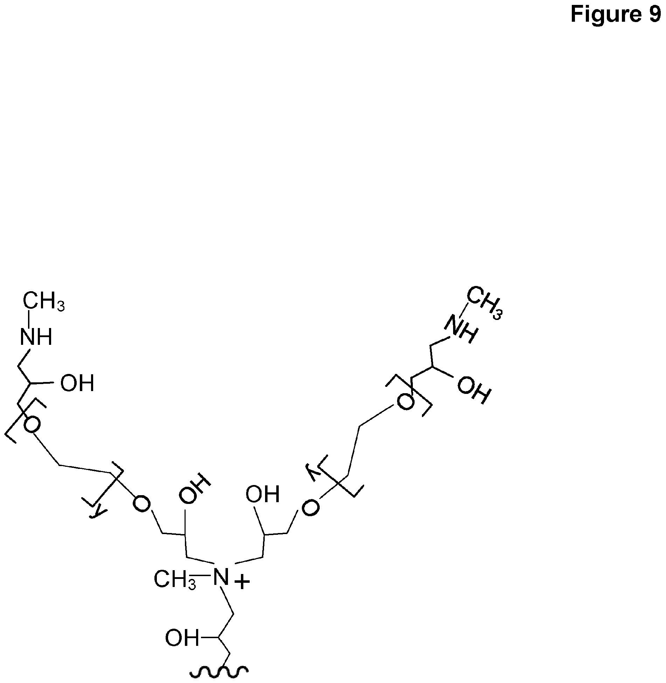

FIGURE 9 shows a schematic of an amine group covalently attached to the pendant epoxide groups of the third polyethylene oxide diepoxide condensation reaction product to form a third amine condensation reaction product. This is the product formed from the second step in forming the terminating condensation layer. In this case the alkylamine used was methyl amine.

It should be noted that a hydroxy group that is spaced apart from a quaternary amine by a two carbon spacer makes the hydroxy group more acidic. A hydroxy group separated from the quaternary amine anion exchange site by a two carbon spacer (may be referred to as a beta position or a beta hydroxy group) are more acidic than hydroxy groups spaced apart by a three carbon spacer (gamma position), a four carbon spacer (delta position), or farther relative to the quaternary amine anion exchange site. The pKa of a beta hydroxy group is believed to be about 13.9, which makes it about 100 times more acidic than a hydroxy group not close to a quaternary amine group. As an example, a model compound choline can be used to illustrate the increased acidity of a beta hydroxy group with respect to a quaternary amine. The hydroxy group of choline has a pKa of 13.9, which is much lower than ethanol, which does not have a proximate quaternary amine. The hydroxy group of ethanol has a pKa of 15.9. The deprotonated and negatively charged beta hydroxy group is stabilized by the proximate positive charge of the quaternary amine group, and thus, results in an increased acidity. The deprotonated hydroxy group can act as a stronger reactant for opening the epoxide ring of a glycidol group and also for influencing the binding of anions to the quaternary amine anion exchange site.

Herein the term "amine," means, unless otherwise stated, a primary, secondary, tertiary, or quaternary amine. It is a nitrogen attached to at least one alkyl group. The one or more alkyl group may be substituted with hydroxyl groups (e.g., -CH₂CH₂OH,-CH₂CH₂CH₂OH, -CH₂CHCH₂OH, and -CH₂CH₂CHCH₂OH). If an alcohol is spaced from a quaternary amine by two carbon atoms, it means that there are two covalently connected carbon atoms between the nitrogen and the alcohol (e.g., H₂NCH₂CH₂OH, HN(CH₂CH₂OH)₂, N(CH₂CH₂OH)₃, H₂NCH₂CHOHCH₃, HN(CH₂CHOHCH₃)₂)

Herein the term "alkyl," by itself or as part of another substituent, means, unless otherwise stated, a straight or branched chain, or cyclic hydrocarbon radical, or combination thereof, which may be fully saturated, mono- or polyunsaturated and can include di- and multivalent radicals, having the number of carbon atoms designated (i.e., C₁-C₁₀ means one to ten carbons). Examples of saturated hydrocarbon radicals include, but are not limited to, groups such as methyl, ethyl, n- propyl (e.g., -CH₂-CH₂-CH₃,-CH₂-CH₂-CH₂-), isopropyl, n-butyl, t-butyl, isobutyl, sec- butyl, cyclohexyl, (cyclohexyl)methyl, cyclopropylmethyl, homologs and isomers of, for example, n-pentyl, n-hexyl, n-heptyl, n-octyl, and the like. An unsaturated alkyl group is one having one or more double bonds or triple bonds. Examples of unsaturated alkyl groups include, but are not limited to, vinyl, 2-propenyl, crotyl, 2- isopentenyl, 2- (butadienyl), 2,4-pentadienyl, 3-(1,4-pentadienyl), ethynyl, 1 - and 3- propynyl, 3-butynyl, and the higher homologs and isomers. The term "alkyl," unless otherwise noted, is also meant to include those derivatives of alkyl defined in more detail below, such as "heteroalkyl". Alkyl groups that are limited to hydrocarbon groups are termed "homoalkyl". The term "alkyl" can also mean "alkylene" or "alkyldiyl" as well as alkylidene in those cases where the alkyl group is a divalent radical.

Herein the term "alkylene" or "alkyldiyl" by itself or as part of another substituent means a divalent radical derived from an alkyl group, as exemplified, but not limited, by-CH₂CH₂CH₂- (propylene or propane-1 ,3-diyl), and further includes those groups described below as "heteroalkylene". Typically, an alkyl (or alkylene) group will have from 1 to about 30 carbon atoms, preferably from 1 to about 25 carbon atoms, more preferably from 1 to about 20 carbon atoms, even more preferably from 1 to about 15 carbon atoms and most preferably from 1 to about 10 carbon atoms. A "lower alkyl", "lower alkylene" or "lower alkyldiyl" is a shorter chain alkyl, alkylene or alkyldiyl group, generally having about 10 or fewer carbon atoms, about 8 or fewer carbon atoms, about 6 or fewer carbon atoms or about 4 or fewer carbon atoms.

Herein the term "alkylidene" by itself or as part of another substituent means a divalent radical derived from an alkyl group, as exemplified, but not limited, by CH₃CH₂CH₂= (propylidene). Typically, an alkylidene group will have from 1 to about 30 carbon atoms, preferably from 1 to about 25 carbon atoms, more preferably from 1 to about 20 carbon atoms, even more preferably from 1 to about 15 carbon atoms and most preferably from 1 to about 10 carbon atoms. A "lower alkyl" or "lower alkylidene" is a shorter chain alkyl or alkylidene group, generally having about 10 or fewer carbon atoms, about 8 or fewer carbon atoms, about 6 or fewer carbon atoms or about 4 or fewer carbon atoms.

Herein the terms "alkoxy," "alkylamino" and "alkylthio" (or thioalkoxy) are used in their conventional sense, and refer to those alkyl groups attached to the remainder of the molecule via an oxygen atom, an amino group, or a sulfur atom, respectively.

Herein the term "heteroalkyl," by itself or in combination with another term, means, unless otherwise stated, a stable straight or branched chain, or cyclic hydrocarbon radical, or combinations thereof, consisting of the stated number of carbon atoms and at least one heteroatom selected from the group consisting of O, N, Si, S and B, and wherein the nitrogen and sulfur atoms may optionally be oxidized and the nitrogen heteroatom may optionally be quaternized. The heteroatom(s) O, N, B, S and Si may be placed at any interior position of the heteroalkyl group or at the position at which the alkyl group is attached to the remainder of the molecule. Examples include, but are not limited to,-CH₂-CH₂-O-CH₃, -CH₂-CH₂-NHCH₃, -CH₂-CH₂-N(CH₃)-CH₃, -CH₂-S-CH₂-CH₃, -CH₂-CH₂,-S(O)-CH₃, -CH₂-CH₂-S(O)2-CH₃, - CH=CH-O-CH₃, -Si(CH₃)₃, -CH₂-CH=N-OCH₃, and -CH=CH-N(CH₃)-CH₃. Up to two heteroatoms may be consecutive, such as, for example, -CH₂-NH-OCH₃ and -CH₂-O-Si(CH₃)₃. Similarly, the term "heteroalkylene" by itself or as part of another substituent means a divalent radical derived from heteroalkyl, as exemplified, but not limited by, -CH₂-CH₂-S-CH₂-CH₂- and -CH₂-S-CH₂-CH₂-NH-CH₂-. For heteroalkylene groups, heteroatoms can also occupy either or both of the chain termini (e.g., alkyleneoxy, alkylenedioxy, alkyleneamino, alkylenediamino, and the like). Optionally, for alkylene and heteroalkylene linking groups, no orientation of the linking group is implied by the direction in which the formula of the linking group is written. For example, the formula -CO₂R'- optionally represents both -C(O)OR' and -OC(O)R'.

Herein the terms "cycloalkyl" and "heterocycloalkyl", by themselves or in combination with other terms, represent, unless otherwise stated, cyclic versions of "alkyl" and "heteroalkyl", respectively. Additionally, for heterocycloalkyl, a heteroatom can occupy the position at which the heterocycle is attached to the remainder of the molecule. Examples of cycloalkyl include, but are not limited to, cyclopentyl, cyclohexyl, 1 -cyclohexenyl, 3-cyclohexenyl, cycloheptyl, and the like. Examples of heterocycloalkyl include, but are not limited to, 1-(1 ,2,5,6-tetrahydropyridyl), 1-piperidinyl, 2-piperidinyl, 3-piperidinyl, 4-morpholinyl, 3-morpholinyl, tetrahydrofuran- 2-yl, tetrahydrofuran-3-yl, tetrahydrothien-2-yl, tetrahydrothien-3-yl, 1 -piperazinyl, 2- piperazinyl, and the like.

Herein the terms "halo" or "halogen," by themselves or as part of another substituent, mean, unless otherwise stated, a fluorine, chlorine, bromine, or iodine atom. Additionally, terms such as "haloalkyl," are meant to include monohaloalkyl and polyhaloalkyl. For example, the term "halo(C₁-C₄)alkyl" is mean to include, but not be limited to, trifluoromethyl, 2,2,2-trifluoroethyl, 4-chlorobutyl, 3-bromopropyl, and the like.

Herein the term "aryl" means, unless otherwise stated, a polyunsaturated, aromatic, substituent that can be a single ring or multiple rings (preferably from 1 to 3 rings), which are fused together or linked covalently. The term "heteroaryl" refers to aryl groups (or rings) that contain from one to four heteroatoms selected from N, O, S, Si and B, wherein the nitrogen and sulfur atoms are optionally oxidized, and the nitrogen atom(s) are optionally quaternized. A heteroaryl group can be attached to the remainder of the molecule through a heteroatom. Non-limiting examples of aryl and heteroaryl groups include phenyl, 1 -naphthyl, 2-naphthyl, 4-biphenyl, 1 -pyrrolyl, 2-pyrrolyl, 3-pyrrolyl, 3-pyrazolyl, 2-imidazolyl, 4-imidazolyl, pyrazinyl, 2-oxazolyl, 4- oxazolyl, 2-phenyl-4-oxazolyl, 5-oxazolyl, 3-isoxazolyl, 4- isoxazolyl, 5-isoxazolyl, 2- thiazolyl, 4-thiazolyl, 5-thiazolyl, 2-furyl, 3-furyl, 2-thienyl, 3- thienyl, 2-pyridyl, 3- pyridyl, 4-pyridyl, 2-pyrimidyl, 4-pyrimidyl, 5-benzothiazolyl, purinyl, 2-benzimidazolyl, 5-indolyl, 1 -isoquinolyl, 5-isoquinolyl, 2-quinoxalinyl, 5-quinoxalinyl, 3-quinolyl, and 6- quinolyl. Substituents for each of the above noted aryl and heteroaryl ring systems are selected from the group of acceptable substituents described below.

For brevity, herein the term "aryl" when used in combination with other terms (e.g., aryloxy, arylthioxy, arylalkyl) includes both aryl and heteroaryl rings as defined above. Thus, the term "arylalkyl" is meant to include those radicals in which an aryl group is attached to an alkyl group (e.g., benzyl, phenethyl, pyridylmethyl and the like) including those alkyl groups in which a carbon atom (e.g., a methylene group) has been replaced by, for example, an oxygen atom (e.g., phenoxymethyl, 2- pyridyloxymethyl, 3-(1-naphthyloxy)propyl, and the like).

Each of the above terms (e.g., "alkyl," "heteroalkyl," "aryl" and "heteroaryl") are meant to include both substituted and unsubstituted forms of the indicated radical. Preferred substituents for each type of radical are provided below.

Substituents for the alkyl and heteroalkyl radicals (including those groups often referred to as alkylene, alkenyl, heteroalkylene, heteroalkenyl, alkynyl, cycloalkyl, heterocycloalkyl, cycloalkenyl, and heterocycloalkenyl) are generically referred to as "alkyl group substituents," and they can be one or more of a variety of groups selected from, but not limited to: substituted or unsubstituted aryl, substituted or unsubstituted heteroaryl, substituted or unsubstituted heterocycloalkyl, -OR', =O, =NR', =N-OR',-NR'R", -SR', -halogen, -SiR'R"R"', -OC(O)R', -C(O)R', -CO₂R', - CONR'R",-OC(O)NR'R", - NR"C(O)R', -NR'-C(O)NR"R"', -NR"C(O)₂R', -NR- C(NR'R"R"')=NR"", -NR-C(NR'R")=NR"', -S(O)R', -S(O)₂R', -OS(O)₂R', -S(O)₂NR'R", -NRSO2R', -CN and-NO₂ in a number ranging from zero to (2m'+1), where m' is the total number of carbon atoms in such radical. R', R", R'" and R"" each preferably independently refer to hydrogen, substituted or unsubstituted heteroalkyl, substituted or unsubstituted aryl, e.g., aryl substituted with 1 -3 halogens, substituted or unsubstituted alkyl, alkoxy or thioalkoxy groups, or arylalkyl groups. When a compound of the invention includes more than one R group, for example, each of the R groups is independently selected as are each R', R", R'" and R"" groups when more than one of these groups is present. When R' and R" are attached to the same nitrogen atom, they can be combined with the nitrogen atom to form a 5-, 6-, or 7- membered ring. For example, -NR'R" is meant to include, but not be limited to, 1-pyrrolidinyl and 4-morpholinyl. From the above discussion of substituents, one of skill in the art will understand that the term "alkyl" is meant to include groups including carbon atoms bound to groups other than hydrogen groups, such as haloalkyl (e.g., -CF₃ and -CH₂CF₃) and acyl (e.g., -C(O)CH₃, -C(O)CF₃,-C(O)CH₂OCH₃, and the like).

Similar to the substituents described for the alkyl radical, substituents for the aryl and heteroaryl groups are generically referred to as "aryl group substituents." The substituents are selected from, for example: substituted or unsubstituted alkyl, substituted or unsubstituted aryl, substituted or unsubstituted heteroaryl, substituted or unsubstituted heterocycloalkyl, -OR', =O, =NR', =N-OR', -NR'R", -SR', -halogen, - SiR'R"R"',-OC(O)R', -C(O)R', -CO2R', -CONR'R", -OC(O)NR'R", -NR"C(O)R', -NR'- C(O)NR"R'", -NR"C(O)₂R', -NR-C(NR'R"R"')=NR"", -NR-C(NR'R")=NR"', -S(O)R', - S(O)₂R',-S(O)₂NR'R", -NRSO₂R', -CN and -NO₂, -R', -N₃, -CH(Ph)₂, fluoro(C₁- C₄)alkoxy, and fluoro(C₁- C₄)alkyl, in a number ranging from zero to the total number of open valences on the aromatic ring system; and where R', R", R'" and R"" are preferably independently selected from hydrogen, substituted or unsubstituted alkyl, substituted or unsubstituted heteroalkyl, substituted or unsubstituted aryl and substituted or unsubstituted heteroaryl. When a compound of the invention includes more than one R group, for example, each of the R groups is independently selected as are each R', R", R'" and R"" groups when more than one of these groups is present.

As used herein, the terms "about" or "approximately" for any numerical values or ranges indicate a suitable dimensional tolerance that allows the part or collection of components to function for its intended purpose as described herein.

While the present disclosure has illustrated by description several embodiments and while the illustrative embodiments have been described in considerable detail, it is not the intention of the applicant to restrict or in any way limit the scope of the appended claims to such detail. Additional advantages and modifications may readily appear to those skilled in the art. Furthermore, features from separate lists can be combined; and features from the examples can be generalized to the whole disclosure.

### EXAMPLES

### Sulfonation of SMP Resin

Supermacroporous (SMP, 25g) resin was dispersed in 125g of glacial acetic acid. Sulfuric acid (500g of conc.) was added and mixed thoroughly and sonicated in a water bath at room temperature for 60 minutes. The reaction mixture was poured into ∼1000g of ice. Once the reaction reached room temperature, the reaction mixture was filtered, and the resin washed with DI water until the washing showed a pH close to neutral. The resin was isolated for further functionalization.

### Example A: 3 Layer MeNH₂

A 9×250 mm (diameter x length) reaction column was packed with 4.0 µm diameter SMP resin particles with surface sulfonation 25 m²/g wide-pore resin (DVB/EVB). The base condensation layer was applied to a packed column by flowing a polyethylene glycol diglycidyl ether-methylamine solution mixture (26% (wt/wt%) with respect to polyethylene glycol diglycidyl ether: 4% (wt/wt %) with respect to methylamine) at 0.5 mL/minute through the column at 69 °C for 60 minutes to form a base condensation polymer. Unless otherwise specified, the reagent solutions were prepared in deionized water. Next, the following reagents were flowed at 0.5 mL/minute through the column at 69 °C.
a) DI water, (5 min)
b) 26% (wt/wt %) Polyethylene glycol diglycidyl ether solution, (30 min)
c) DI water, (5 min)
d) 4% (wt/wt %) Methylamine solution, (30 min)
e) DI water, (5 min)
f) 26% (wt/wt %) Polyethylene glycol diglycidyl ether (30 min)
g) DI water, (5 min)
h) 4% (wt/wt %) Methylamine solution, (30 min)
i) DI water, (5 min)
j) 26% (wt/wt %) Polyethylene glycol diglycidyl ether solution, (30 min)
k) DI water, (5 min)
l) 4% (wt/wt %) Methylamine solution, (30 min)
m) DI water (25 min).

The anion exchange resin was removed from the reaction column into a container and dispersed with physical force. 200 grams of 0.05 M NaOH was mixed with 20 grams of the anion exchange resin (1:10 ratio of resin to 0.05M NaOH, wt/wt %) in the container. The mixture was then sonicated to disperse the resin particles at room temperature for 2 minutes and then sieved and filtered. Next, the filter cake was washed with deionized water. The resulting filter cake formed a cleaned-up resin that was packed into 2 x 250 mm chromatography columns.

### Example B: 2 Layer MDEA

A 9×250 mm (diameter x length) reaction column was packed with 4.0 µm diameter SMP resin particles with surface sulfonation 25 m²/g wide-pore resin (DVB/EVB). The base condensation layer was applied to a packed column by flowing a polyethylene glycol diglycidyl ether-methylamine solution mixture (26% (wt/wt%) with respect to polyethylene glycol diglycidyl ether: 4% (wt/wt %) with respect to methylamine) at 0.5 mL/minute through the column at 69 °C for 60 minutes to form a base condensation polymer. Unless otherwise specified, the reagent solutions were prepared in deionized water. Next, the following reagents were flowed at 0.5 mL/minute through the column at 69 °C.
a) DI water, (5 min)
b) 26% (wt/wt %) Polyethylene glycol diglycidyl ether solution, (30 min)
c) DI water, (5 min)
d) 4% (wt/wt %) Methylamine solution, (30 min)
e) DI water, (5 min)
f) 26% (wt/wt %) Polyethylene glycol diglycidyl ether (30 min)
g) DI water, (5 min)
h) 10% (wt/wt %) Methyldiethanolamine, (40 min)
i) DI water (25 min).

The anion exchange resin was removed from the reaction column into a container and dispersed with physical force. 200 grams of 0.05 M NaOH was mixed with 20 grams of the anion exchange resin (1:10 ratio of resin to 0.05M NaOH, wt/wt %) in the container. The mixture was then sonicated to disperse the resin particles at room temperature for 2 minutes and then sieved and filtered. Next, the filter cake was washed with deionized water. The resulting filter cake formed a cleaned-up resin that was packed into 2 x 250 mm chromatography columns.

### Example C: 2 Layer MeNH₂

A 9×250 mm (diameter x length) reaction column was packed with 4.0 µm diameter SMP resin particles with surface sulfonation 25 m²/g wide-pore resin (DVB/EVB). The base condensation layer was applied to a packed column by flowing a polyethylene glycol diglycidyl ether-methylamine solution mixture (26% (wt/wt%) with respect to polyethylene glycol diglycidyl ether: 4% (wt/wt %) with respect to methylamine) at 0.5 mL/minute through the column at 69 °C for 60 minutes to form a base condensation polymer. Unless otherwise specified, the reagent solutions were prepared in deionized water. Next, the following reagents were flowed at 0.5 mL/minute through the column at 69 °C.
a) DI water, (5 min)
b) 26% (wt/wt %) Polyethylene glycol diglycidyl ether solution, (30 min)
c) DI water, (5 min)
d) 4% (wt/wt %) Methylamine solution, (30 min)
e) DI water, (5 min)
f) 26% (wt/wt %) Polyethylene glycol diglycidyl ether (30 min)
g) DI water, (5 min)
h) 4% (wt/wt %) Methylamine solution, (30 min)
i) DI water (25 min).

The anion exchange resin was removed from the reaction column into a container and dispersed with physical force. 200 grams of 0.05 M NaOH was mixed with 20 grams of the anion exchange resin (1:10 ratio of resin to 0.05M NaOH, wt/wt %) in the container. The mixture was then sonicated to disperse the resin particles at room temperature for 2 minutes and then sieved and filtered. Next, the filter cake was washed with deionized water. The resulting filter cake formed a cleaned-up resin that was packed into 2 x 250 mm chromatography columns.

### Chromatographic Conditions

A chromatography column of was installed into a Thermo Scientific Dionex ICS-5000⁺ ion chromatography system (commercially available from Thermo Fisher Scientific, Sunnyvale, California). A pump was used to pump deionized water into a Thermo Scientific Dionex EGC 500 KOH cartridge (Thermo Fisher Scientific, Sunnyvale, California) for generating a KOH eluent to a predetermined concentration. A temperature regulator was used to maintain a column temperature of 30 °C. A Dionex AERS 500 suppressor (Thermo Fisher Scientific, Sunnyvale, California) was used along with a Thermo Scientific conductivity detector. The Dionex AERS 500 suppressor typically uses a constant current to electrolyze water for regenerating the suppressor. The details for each analysis are given below.

### Chromatography: Anions

Chromatography was performed by injecting a standard solution that contains the anions listed below into a chromatography column containing resin of one of Examples A, B, and C.

**Standard solution of anions**

| # | Peaks: | mg/L |
|---|---|---|
| 1 | Fluoride | 5.0 |
| 2 | Chloride | 10.0 |
| 3 | Bromide | 25.0 |
| 4 | Iodide | 25.0 |
| 5 | Sulfate | 30.0 |

**Chromatography conditions**

| Column Type | Flow Rate (mL/min) | Injection Volume (µL) | Time (minutes) | KOH Concentration (mM) | AERS Format (mm) / Current (mA) |
|---|---|---|---|---|---|
| 4X150 mm Prototype | 1.0 | 10 | 0-15 | 4 | / 34 |

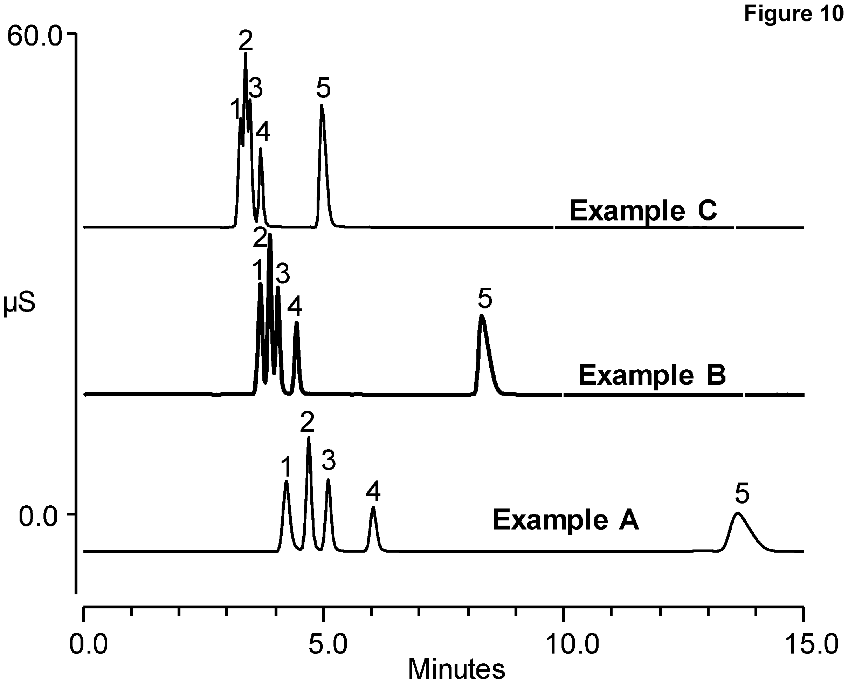

The resulting chromatograms are shown in Figure 10.

### Chromatography: Polythionates

Chromatography was performed by injecting a standard solution that contained one of dithionate, trithionate, and tetrathionate at a concentration listed below into a chromatography column containing resin of one of Examples A, B, and C.

**Standard solution of polythionates**

| Peaks: | mg/L |
|---|---|
| Dithionate | 25.0 |
| Trithionate | 25.0 |
| Tetrathionate | 25.0 |

**Chromatography conditions for Example A**

| Column Type | Flow Rate (mL/min) | Injection Volume (µL) | Time (minutes) | KOH Concentration (mM) | AERS Format (mm) / Current (mA) |
|---|---|---|---|---|---|
| | 1.0 | 10 | 0-5 | 5 | 4 / 99 |
| 4x150mm | | | 5-15 | 5-45 | |
| Prototype | | | 15-20 | 45 | |

**Chromatography conditions for Example B**

| Column Type | Flow Rate (mL/min) | Injection Volume (µL) | Time (minutes) | KOH Concentration (mM) | AERS Format (mm) / Current (mA) |
|---|---|---|---|---|---|
| | 1.0 | 10 | 0-5 | 3 | 4 / 99 |
| 4x150mm | | | 5-15 | 5-40 | |
| Prototype | | | 15-20 | 40 | |

**Chromatography conditions for Example C**

| Column Type | Flow Rate (mL/min) | Injection Volume (µL) | Time (minutes) | KOH Concentration (mM) | AERS Format (mm) / Current (mA) |
|---|---|---|---|---|---|
| | 1.0 | 10 | 0-5 | 3 | 4 / 99 |
| 4x150mm | | | 5-15 | 5-40 | |
| Prototype | | | 15-20 | 40 | |

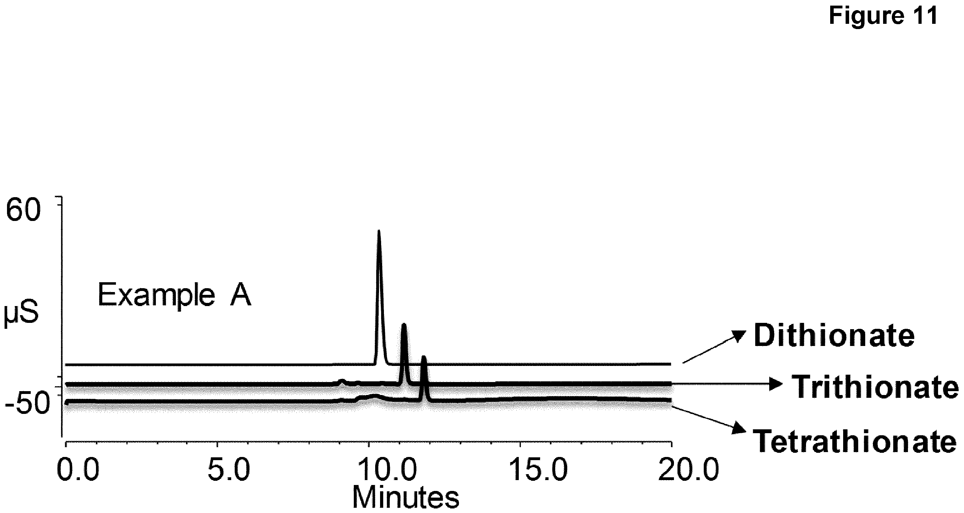

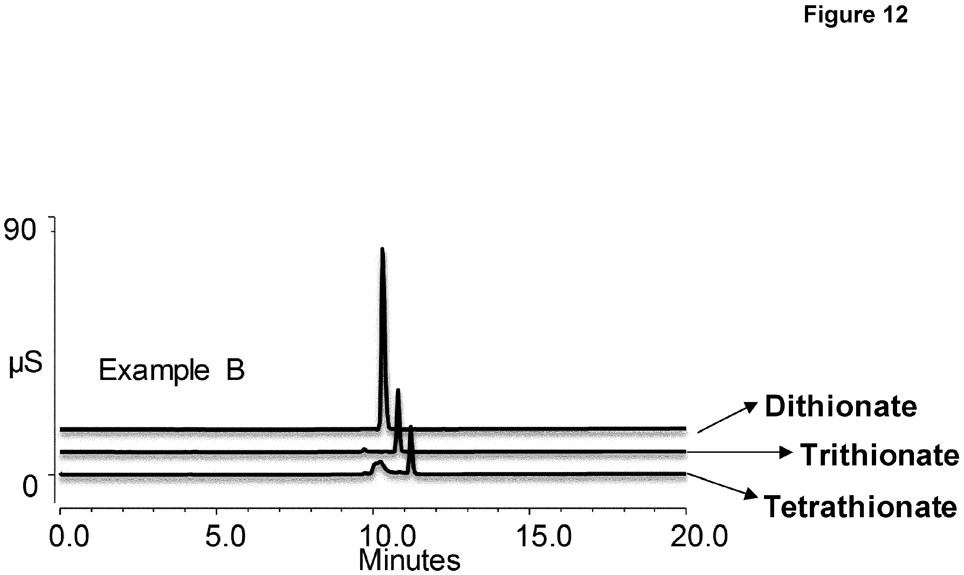

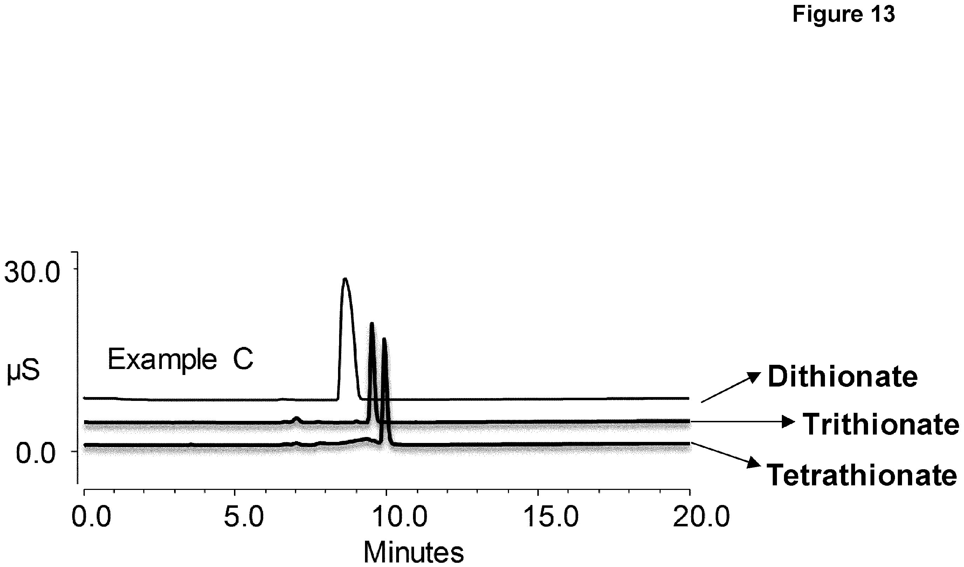

The resulting chromatograms are shown in Figures 11, 12, and 13, with dithionate as the top chromatogram, trithionate the middle chromatogram, and tetrathionate the bottom chromatogram. Example C of Figure 13 showed a distorted peak for dithionate because the capacity of the ion exchange resin is too low. The chromatograms of Figure 11 using the ion exchange resin of Example A required a higher eluent concentration than the chromatograms of Figure 12 using the ion exchange resin of Example B providing for simpler and more cost effective separation. In addition, the ion exchange resin of Example A required an additional reaction cycle than the ion exchange resin of Example B making Example B easier to manufacture.

### Chromatography: Polarizable anions

Chromatography was performed by injecting a standard solution that contained one of the polarizable anions listed below into a chromatography column containing resin of one of Examples A and B.

**Standard solution of anions**

| # | Peaks: | mg/L |
|---|---|---|
| 1 | p-toluenesulfonic acid | 25 |
| 2 | 2-naphthalenesulfonic acid | 25 |
| 3 | 1-naphthol-4-sulfonic acid | 25 |
| 4 | Naphthalene-trisulfonic acid | 25 |
| 5 | FDC Yellow #5 | 25 |
| 6 | FDC Yellow #6 | 25 |
| 7 | FDC Red #40 | 25 |

**Chromatography conditions for Example A**

| Column Type | Flow Rate (mL/min) | Injection Volume (µL) | Time (minutes) | KOH Concentration (mM) | AERS Format (mm) / Current (mA) |
|---|---|---|---|---|---|
| | 1.0 | 10 | 0-5 | 5 | 4 / 99 |
| 4x150mm | | | 5-15 | 5-45 | |
| Prototype | | | 15-20 | 45 | |

**Chromatography conditions for Example B**

| Column Type | Flow Rate (mL/min) | Injection Volume (µL) | Time (minutes) | KOH Concentration (mM) | AERS Format (mm) / Current (mA) |
|---|---|---|---|---|---|
| | 1.0 | 10 | 0-5 | 3 | 4 / 99 |
| 4x150mm | | | 5-15 | 5-40 | |
| Prototype | | | 15-20 | 40 | |

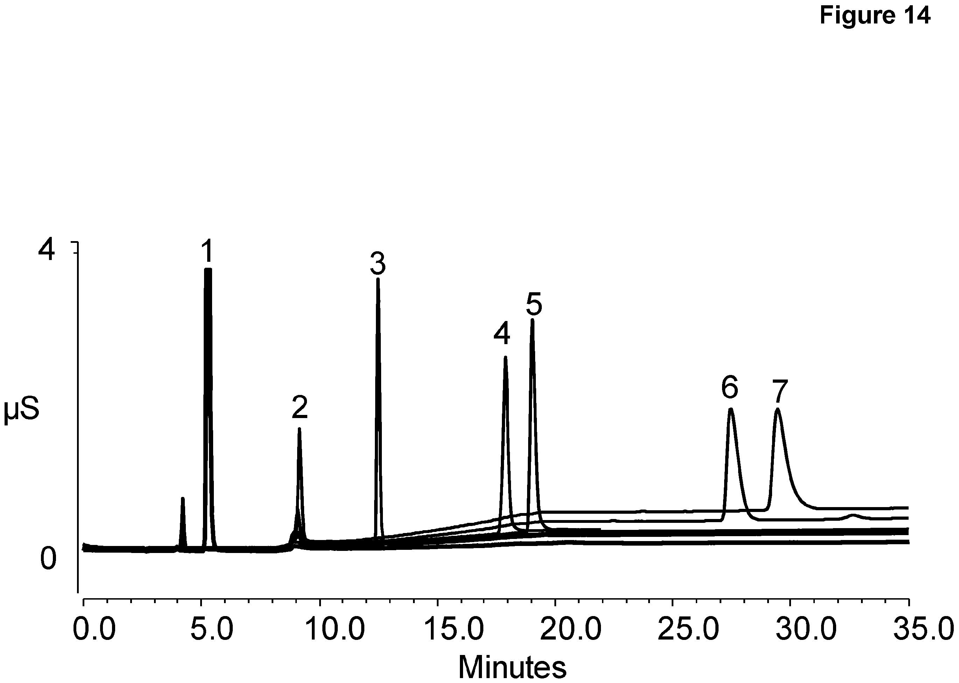

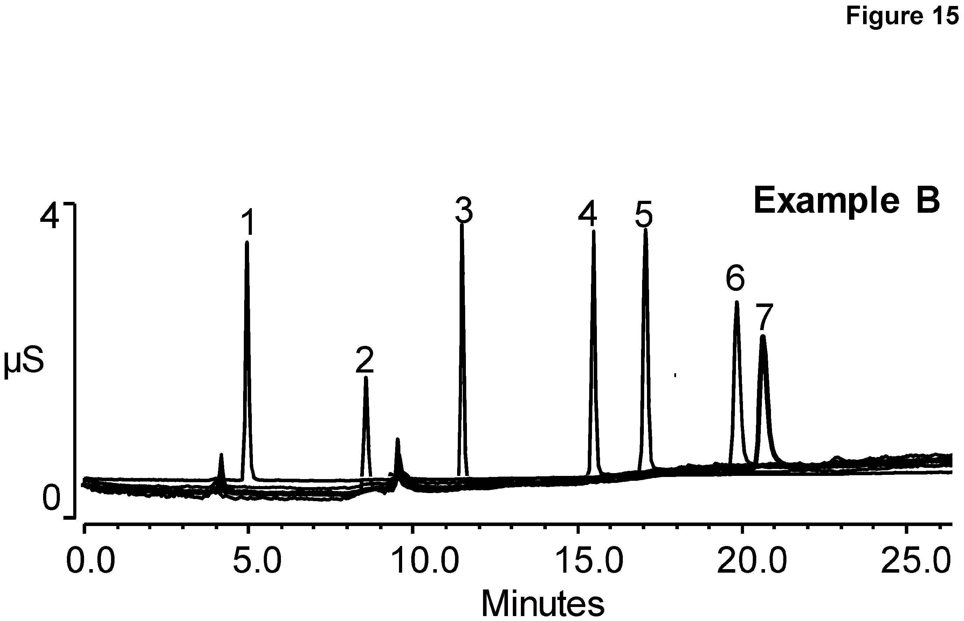

The resulting chromatograms are shown in Figures 14 and 15, with the polarizable anions eluting in the order shown in the table above. In Figure 14, it should be noted that FDC Yellow #5 and #6 each showed an additional peak eluting before peak 1 and FDC Red #40 showed an additional peak overlapping with peak 2. In Figure 15, it should be noted that FDC Yellow #6 and FDC Red #40 each showed additional peaks eluting before peak 1 and in between peaks 2 and 3. The chromatograms of Figure 14 using the ion exchange resin of Example A required a higher eluent concentration than the chromatograms of Figure 15 using the ion exchange resin of Example B providing for simpler and more cost effective separation. In addition, the ion exchange resin of Example A required an additional reaction cycle than the ion exchange resin of Example B making Example B easier to manufacture.

### Chromatography: Detection of perchlorate

Chromatography was performed using extracts of soil samples containing chlorine and sulfate on Example B. Only in Sample 1 was perchlorate detected. The ratio of chlorine to perchlorate is estimated to be ∼4000:1 and sulfate to perchlorate is estimated to be ∼2000:1.

**Chromatography conditions for Example B**

| Column Type | Flow Rate (mL/min) | Injection Volume (µL) | Time (minutes) | KOH Concentration (mM) | AERS Format (mm) / Current (mA) |
|---|---|---|---|---|---|
| 2X150 mm Prototype | 0.25 | 2.5 | 0-10 | 4 | 2/6 |

Because perchlorate elutes before sulfate, this column is suitable for mass spectrum quantification of ppb levels of perchlorate.

## Claims

1. An anion exchange stationary phase comprising:
a) negatively charged substrate particles,
b) a base condensation polymer layer attached to the negatively charged substrate particles, the base condensation polymer layer comprising:
1) quaternary amines,
2) polyethylene oxides, and
3) hydroxy groups; wherein at least a portion of the hydroxy groups are spaced from the quaternary amines by two carbons;
c) one or more alkylamine condensation polymer layers covalently attached to base condensation polymer layer at the quaternary amine of that layer, the alkylamine condensation polymer layers comprising:
1) polyethylene oxides,
2) hydroxy groups; wherein at least a portion of the hydroxy groups are spaced from the quaternary amines by two carbons, and
3) quaternary amines;
d) a terminating condensation layer covalently attached to the alkylamine condensation polymer layer, the terminating condensation layer comprising:
1) polyethylene oxides,
2) hydroxy groups; wherein at least a portion of the hydroxy groups are spaced from the quaternary amines by two carbons, and
3) quaternary amines, wherein the quaternary amine comprises two alkyl alcohols, wherein the alcohols are spaced from the quaternary amines by two carbons.

2. The anion exchange stationary phase of claim 1, wherein there is one alkylamine condensation polymer layer.

3. The anion exchange stationary phase of claim 1, wherein there are two alkylamine condensation polymer layers.

4. The anion exchange stationary phase of any of claims 1-3, wherein the quaternary amines in the terminating condensation layer comprises an alkyl group.

5. The anion exchange stationary phase of claim 4, wherein alkyl group is a methyl group or wherein alkyl group is an ethyl group.

6. The anion exchange stationary phase of any of claims 1-5, wherein the polyethylene oxide has a molecular weight range of from about 150 to about 1000, preferably wherein the polyethylene oxide has a molecular weight range of from about 400 to about 600.

7. An anion exchange stationary phase formed by:
a) forming a base condensation layer by reacting polyethylene glycol diglycidyl ether with a primary amine on negatively charged substrate particles;
b) forming one or more alkylamine polymer condensation layers on the base condensation layer by conducting one or more reaction cycles; wherein the reaction cycle comprises: treating with polyethylene glycol diglycidyl ether followed by treating with alkylamine.

8. The anion exchange stationary phase of claim 7, additionally comprising the step of:
c) forming a terminating condensation layer on the alkylamine polymer condensation layers by treating with polyethylene glycol diglycidyl ether followed by treating with tertiary amine comprising two alkyl alcohols and an alkyl group.

9. The anion exchange stationary phase of claim 7, additionally comprising the step of:
c) forming a terminating condensation layer on the alkylamine polymer condensation layers by treating with polyethylene glycol diglycidyl ether followed by treating with a primary or secondary amine, followed by treating with an epoxide.

10. The anion exchange stationary phase of any of claims 7-9, wherein there is one alkylamine polymer condensation layer.

11. The anion exchange stationary phase of any of claims 7-9, wherein there are two alkylamine polymer condensation layers.

12. The anion exchange stationary phase of claim 8, wherein the tertiary amine comprising two alkyl alcohols and an alkyl group is methyl diethanolamine.

13. The anion exchange stationary phase of any of claims 7-12, wherein the polyethylene glycol diglycidyl ether has a molecular weight range of from about 150 to about 1000, preferably wherein the polyethylene glycol diglycidyl ether has a molecular weight range of from about 400 to about 600.

14. The anion exchange stationary phase of any of claims 7-13, which is further in accordance with claim 1.

15. A method of separating a sample using an anion exchange stationary phase, the anion exchange stationary comprising:
a) negatively charged substrate particles;
b) a base condensation polymer layer attached to the negatively charged substrate particles, the base condensation polymer layer comprising:
1) quaternary amines,
2) polyethylene oxides, and
3) hydroxy groups; wherein at least a portion of the hydroxy groups are spaced from the quaternary amines by two carbons;
c) one or more alkylamine condensation polymer layers covalently attached to base condensation polymer layer at the quaternary amine of that layer, the alkylamine condensation polymer layers comprising:
1) polyethylene oxides,
2) hydroxy groups; wherein at least a portion of the hydroxy groups are spaced from the quaternary amines by two carbons, and
3) quaternary amines;
d) a terminating condensation layer covalently attached to the alkylamine condensation polymer layer, the terminating condensation layer comprising:
1) polyethylene oxides,
2) hydroxy groups; wherein at least a portion of the hydroxy groups are spaced from the quaternary amines by two carbons, and
3) quaternary amines, wherein the quaternary amine comprises two alkyl alcohols, wherein the alcohols are spaced from the quaternary amines by two carbons;
the method comprising:
flowing an eluent through a chromatography column, the chromatography column containing the anion exchange stationary phase, in which the eluent comprises a hydroxide;
separating at least one analyte from a sample injected into the chromatography column; and
detecting the at least one analyte with a detector.
